# EUROPÄISCHE PATENTSCHRIFT

(11) **EP 3 746 494 B1**
(45) Veröffentlichungstag und Bekanntmachung des Hinweises auf die Patenterteilung: **29.05.2024**
(21) Anmeldenummer: 19700828.7
(22) Anmeldetag: 23.01.2019
(51) Int. Cl.: C08G 18/48, C08G 18/72, C08G 18/76, C08G 18/79, C08G 18/32, C08G 18/40, C08G 18/42, C08G 101/00

(54) **POLYURETHANE MIT GERINGEN EMISSIONEN ORGANISCHER VERBINDUNGEN**
POLYURETHANES WITH LOW EMISSIONS OF ORGANIC COMPOUNDS
POLYURÉTHANE À FAIBLE ÉMISSION DE COMPOSÉS ORGANIQUES

(30) Priorität: 02.02.2018 EP 18154960
(43) Veröffentlichungstag der Anmeldung: 09.12.2020
(73) Patentinhaber: BASF SE, 67056 Ludwigshafen am Rhein (DE)
(72) Erfinder: TOMOVIC, Zeljko, 49448 Lemfoerde (DE); ZARBAKHSH, Sirus, 67056 Ludwigshafen (DE); OTERO MARTINEZ, Iran, 49448 Lemfoerde (DE)
(74) Vertreter: BASF IP Association
(86) Internationale Anmeldenummer: PCT/EP2019/051568
(87) Internationale Veröffentlichungsnummer: WO 2019/149583

(56) Entgegenhaltungen:
- WO-A1-2017/207687
- US-A- 4 006 122
- US-A- 4 681 903
- US-A1- 2004 242 867

## Beschreibung

Die vorliegende Erfindung betrifft ein Verfahren zur Herstellung von Polyurethanschaumstoffen bei dem man (a) Polyisocyanat, (b) polymeren Verbindungen mit gegenüber Isocyanaten reaktiven Gruppen, (c) Katalysatoren und gegebenenfalls (d) Treibmittel, (e) Kettenverlängerungs- und oder Vernetzungsmittel und (f) Hilfsmittel und/oder Zusatzstoffe zu einer Reaktionsmischung vermischt und die Reaktionsmischung zum Polyurethanschaumstoff ausreagieren lässt, wobei die polymeren Verbindungen (b) ein Polyesterol (b1), erhältlich durch Polykondensation einer Säurekomponente mit einer Alkoholkomponente, enthält, wobei die Säurekomponente Malonsäure und/oder deren Derivate und die Alkoholkomponente einen aliphatischen Dialkohol mit 4 bis 12 Kohlenstoffatomen enthält und der Gewichtsanteil des Polyesterols (b1), bezogen auf das Gesamtgewicht der polymeren Verbindungen mit gegenüber Isocyanaten reaktiven Gruppen (b) 0,1 bis 50 Gew.-% beträgt. Weiter betrifft die vorliegende Erfindung ein Polyurethanschaumstoff, erhältlich nach einem solchen Verfahren und die Verwendung in geschlossenen Räumen, beispielsweise im Innern von Verkehrsmitteln.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispielsweise von Rohren, Warmwasserspeichern oder Kühlschränken und als Verkleidungsteile, beispielsweise im Fahrzeugbau. Insbesondere im Automobilbau werden Polyurethane häufig eingesetzt, beispielsweise in der Automobilau-ßenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Dabei ist bekannt, dass Polyurethane zu Emissionen organischer Substanzen neigen, die zu Geruchsbelästigungen oder im Fall von hohen Konzentrationen zu Unwohlsein führen können. Dabei sind insbesondere geschlossene Räume, beispielsweise im Innern von Gebäuden oder Fahrzeugen, beispielsweise Automobile, besonders betroffen. Ein Beispiel für solche Emissionen ist die Emission von Aldehyden. Dabei gibt es bereits unterschiedliche Ansätze zur Verringerung der Aldehydemissionen.

So beschreibt beispielsweise EP 1428847, dass Aldehydemissionen durch nachträgliche Zugabe von polymeren Stoffen mit primären und/oder sekundären Aminogruppen vermindert werden können. Verantwortlich für die Reduktion der Emissionen sind die Amingruppen im Polymer. Da diese gegenüber Isocyanat reaktiv sind und größtenteils durch Reaktion mit dem Isocyanat deaktiviert werden, sollte der polymere Wirkstoff auf den bereits hergestellten Schaum gegeben werden. Nachteilig ist hier ein umständliches Verfahren mit einem zusätzlichen Schritt der Nachbehandlung des Schaumstoffs. Der Einsatz in kompakten Systemen oder geschlossenzelligen Schaumstoffen ist nicht möglich.

In US 20130203880 wird der Einsatz von Polyhydrazodicarbonamid als Substanz zur Reduktion von Aldehydemissionen in Polyurethanschaumstoffen beschrieben. Eine deutliche Reduktion von Aldehyden wird allerdings nur bei Zugabe einer großen Menge an Polyhydrazodicarbonamid von 2 bis 5,5 Gew.-% in der Polyolkomponente erreicht. Da Polyhydrazodicarbonamid ebenfalls katalytische Eigenschaften aufweist, wird durch die Zugabe dieser Substanz in dieser Größenordnung das Reaktionsprofil geändert. Weiter ist die erreichte Aldehydreduktion selbst bei Einsatz großer Mengen an Polyhydrazodicarbonamid weiter verbesserungswürdig.

Aus US 2006/0141236 ist der Einsatz von Hydrazinverbindungen in Polyurethanen als Aldehydfänger beschrieben. Dabei wird die aktive Substanz direkt in die Polyolkomponente gegeben. In den Beispielen wird der Einsatz von Acethydrazid, Carbohydrazid und Adipinsäuredihydrazid beschrieben. Dadurch werden Reduktionen der Aldehydemissionen von 60 bis 70 % erhalten.

WO 2015082316 beschreibt den Einsatz von CH-Aciden Verbindungen der allgemeinen Formel R¹-CH₂-R², wobei R¹ und R² unabhängig voneinander für einen elektronenziehenden Rest steht, zur Reduktion von Formaldehydemissionen in Kombination mit einbaubaren Katalysatoren. Dabei kann Formaldehyd wirksam reduziert werden, allerdings zeigen die Schaumstoffproben immer noch hohe Emissionen flüchtiger, organischer Substanzen, was zu hohen TVOC-Werten nach VDA 277 führt.

WO 2016188675 beschreibt den Einsatz von CH-Aciden Substanzen, beispielsweise Verbindungen, die durch Veresterung von Polyetherolen mit Methylacetoacetat erhalten werden können. Auch hier kann die Emission von Formaldehyd wirksam verringert werden, allerdings treten weiter hohe Emissionen anderer organischer Verbindungen auf (z. B. zu hohen TVOC-Werten nach VDA 277), insbesondere bei höheren Temperaturen, die beispielsweise bei der Herstellung der Schäume erreicht werden.

WO 2017207687 beschreibt den Einsatz von Malonsäurehydraziden zur Reduktion der Emission organischer Substanzen. Nachteilig ist an diesen Substanzen, dass sie nur schwer löslich sind und in gängigen Polyolkomponenten nicht vollständig gelöst werden können sowie der hohe Preis dieser Verbindungen.

Aufgabe der vorliegenden Erfindung war es, Polyurethanschaumstoffe zu liefern, die eine verringerte Emission organischer Substanzen, wie Aldehyde, besonders Formaldehyd und Acetaldehyd, aufweisen. Insbesondere sollten die für die reduzierte Aldehydemission verantwortlichen Substanzen eine lang andauernde Wirksamkeit zeigen und zu keinen zusätzlichen Emissionen des Polyurethanschaumstoffs führen. Weiter sollen die emissionsarmen Polyurethanschaumstoffe durch ein einfaches Verfahren herstellbar sein, bei dem die Zugabe der für die Reduktion der Aldehydemissionen verantwortlichen Substanzen direkt zu der Reaktionsmischung zur Herstellung des Polyurethanschaumstoffs möglich ist. Insbesondere sollen dabei kostengünstige und einfach zu handhabende Stoffe zum Einsatz kommen, die die Herstellung der Polyurethanschaumstoffe nicht beeinträchtigen.

Die erfindungsgemäße Aufgabe wird gelöst durch ein Verfahren zur Herstellung von Polyurethanschaumstoffen bei dem man (a) Polyisocyanat, (b) polymeren Verbindungen mit gegenüber Isocyanaten reaktiven Gruppen, (c) Katalysatoren und gegebenenfalls (d) Treibmittel, (e) Kettenverlängerungs- und oder Vernetzungsmittel und (f) Hilfsmittel und/oder Zusatzstoffe zu einer Reaktionsmischung vermischt und die Reaktionsmischung zum Polyurethanschaumstoff ausreagieren lässt, wobei die polymeren Verbindungen (b) ein Polyesterol (b1), erhältlich durch Polykondensation einer Säurekomponente mit einer Alkoholkomponente, enthält, wobei die Säurekomponente Malonsäure und/oder deren Derivate und die Alkoholkomponente einen aliphatischen Dialkohol mit 4 bis 12 Kohlenstoffatomen enthält und der Gewichtsanteil des Polyesterols (b1), bezogen auf das Gesamtgewicht der polymeren Verbindungen mit gegenüber Isocyanaten reaktiven Gruppen (b) 0,1 bis 50 Gew.-% beträgt. Weiter wird die erfindungsgemäße Aufgabe gelöst durch ein Polyurethanschaumstoff, erhältlich nach einem erfindungsgemäßen Verfahren. Weiter ist Gegenstand der vorliegenden Erfindung die Verwendung des erfindungsgemäßen Polyurethanschaumstoffs in geschlossenen Räumen, beispielsweise in Verkehrsmitteln.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethanschaumstoffe umfassen Schaumstoffe auf Basis von Polyisocyanat-Polyadditionsprodukten, wie Weichschaumstoffe, Halbhartschaumstoffe, Hartschaumstoffe oder Integralschaumstoffe. Weiter sind unter Polyurethanschaumstoffen im Sinn der Erfindung Polymerblends, enthaltend Polyurethane und weitere Polymere, zu verstehen. Vorzugsweise sind die erfindungsgemäßen Polyurethanschaumstoffe Polyurethanschaumstoffe, die, abgesehen von den im Folgenden erläuterten Polyurethanbausteinen (a) bis (f) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethanschaumstoffe erhalten indem man Polyisocyanate (a), polymeren Verbindungen mit gegenüber Isocyanaten reaktiven Gruppen (b), Katalysatoren (c) und gegebenenfalls Treibmittel (d), Kettenverlängerungs- und oder Vernetzungsmittel (f) und Hilfsmittel und/oder Zusatzstoffe (f) zu einer Reaktionsmischung vermischt und die Reaktionsmischung zum Polyurethan ausreagieren lässt, wobei die polymeren Verbindungen (b) ein Polyesterol (b1), erhältlich durch Polykondensation einer Säurekomponente mit einer Alkoholkomponente, enthält, wobei die Säurekomponente Malonsäure und/oder deren Derivate und die Alkoholkomponente einen aliphatischen Dialkohol mit 4 bis 12 Kohlenstoffatomen enthält.

Dabei ist der erfindungsgemäße Polyurethanschaumstoff in einer bevorzugten Ausführungsform ein Polyurethanschaumstoff mit einer mittleren Dichte von 10 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 180 g/L auf.

Dabei wird der erfindungsgemäße Polyurethanschaumstoff vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethan-halbhartschaumstoff als Hinterschäumung von Tür-Seitenelementen oder Instrumententafeln, ein Polyurethanintegralschaumstoff als Lenkrad, Schaltknopf oder Kopfstütze.

Die zur Herstellung der erfindungsgemäßen Polyurethanschaumstoffe verwendeten Polyisocyanate (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2 ' -, 2,4 ' - und 4,4 ' -Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanate (a) können in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 20 bis 100 ° C, bevorzugt bei etwa 80 ° C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden. In einer bevorzugten Ausführungsform enthalten die als Bestandteil (a2) eingesetzten Polymeren Verbindungen mit gegenüber Isocyanaten reaktiven Gruppen das Polyesterol (b1), dabei kann auch die gesamte Einsatzmenge des Polyesterols (b1) zur Herstellung des Prepolymeren eingesetzt werden. Wird ein Isocyanatprepolymer als Isocyanat (a) eingesetzt, weist dieses vorzugsweise einen Isocyanatgehalt (NCO-Gehalt) von größer als 5%, mehr bevorzugt 10 bis 50 %, noch mehr bevorzugt 15 bis 40 % besonders bevorzugt 17 bis 35 % und insbesondere 20 bis 30 Gew.-% auf.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 1 bis 8 und einem zahlenmittleren Molekulargewicht von 400 bis 15000 g/mol, wobei die mittlere Funktionalität, gemittelt über alle polymeren Verbindungen mit gegenüber Isocyanaten reaktiven Gruppen, mindestens 2 beträgt. So können beispielsweise Verbindungen, ausgewählt aus der Gruppe der Polyetherpolyole, Polyesterpolyole, auch als Polyetherpolyol oder Polyetheralkohole oder Polyesterpolyol oder Polyesteralkohole bezeichnet, oder Mischungen daraus, verwendet werden.

Polyetheralkohole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole sind zum Beispiel herstellbar aus einer Säurekomponente, enthaltend einer aliphatischen oder aromatischen Dicarbonsäure oder deren Derivate, und einer Alkoholkomponente, enthaltend mehrwertige Alkohole, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators.

Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

Weiter enthalten die erfindungsgemäßen polymeren Verbindungen mit gegenüber Isocyanaten reaktiven Gruppen (b) mindestens ein Polyesterol (b1), erhältlich durch Polykondensation einer Säurekomponente mit einer Alkoholkomponente, wobei die Säurekomponente Malonsäure und/oder deren Derivate und die Alkoholkomponente einen aliphatischen Dialkohol mit 4 bis 12 Kohlenstoffatomen enthält, wobei der Gewichtsanteil des Polyesterols (b1), bezogen auf das Gesamtgewicht der polymeren Verbindungen mit gegenüber Isocyanaten reaktiven Gruppen (b) 0,1 bis 50 Gew.-% beträgt.

Die Säurekomponente enthält Malomnsäure oder deren Derivate. Dabei soll im Rahmen der Erfindung unter Säurederivaten alle Abkömmlinge der Säure verstanden werden, die in der Lage sind, mit Alkoholen zu Estern zu reagieren. Solche Derivate umfassen beispielsweise Säurechloride, Säureanhydride, oder Ester, wie methyl- oder Ethylester. Neben Malonsäure oder deren Derivate kann die Säurekomponente eine oder mehrere weitere Di- oder Polycarbonsäuren oder deren Derivate enthalten, vorzugsweise Disäuren mit 2 bis 12, bevorzugt 6 bis 12 Kohlenstoffatomen. Bevorzugte Beispiele sind Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Enthält die Säurekomponente neben Malonsäure oder deren Derivate weitere Di- oder Polycarbonsäuren oder deren Derivate, umfassen diese besonders bevorzugt aliphatische Disäuren oder deren Derivate und insbesondere Adipinsäure. In einer besonders bevorzugten Ausführungsform werden als Säurekomponente ausschließlich Malonsäure und Adipinsäure, jeweils gegebenenfalls auch in Form ihrer Derivate, eingesetzt.

Dabei enthält die Säurekomponente vorzugsweise 20 bis 100 mol-%, mehr bevorzugt 60 bis 100 mol-% und insbesondere 80 bis 100 mol-% Malonsäure oder deren Derivate.

Die Alkoholkomponente enthält aliphatische Dialkohole mit 4 bis 12 Kohlenstoffatomen, wie Butandiol, Pentandiol, Hexandiol, oder Decandiol, bevorzugt Pentandiol und/oder Hexandiol, insbesondere Hexandiol. Neben diesen Alkoholen können auch weitere, Mono-, Di oder Polyalkohole in der Alkoholkomponente enthalten sein, beispielsweise solche mit einem Molekulargewicht von 62 bis 400 g/mol. Beispiele sind Monoethylenglycol, 1,2- bzw. 1,3-Propandiol, Diethylenglycol, Dipropylenglycol, Glycerin, Pentaerythritol oder Trimethylolpropan.

Vorzugsweise weisen diese Dialkohole mit 4 bis 12 Kohlenstoffatomen endständige OH-Gruppen auf. Besonders bevorzugt weist die Alkoholkomponente 1,4-Butandiol, 1,5-Pentandiol, 1,6-Hexandiol oder 1,10-Decandiol, insbesondere 1,6-Hexandiol auf. Dabei beträgt der Anteil an Dialkoholen mit 4 bis 12 Kohlenstoffatomen, bezogen auf die Alkoholkomponente, vorzugsweise 50 bis 100 mol-%, besonders bevorzugt 70 bis 100 mol-% und insbesondere 80 bis 98 mol-%. In einer besonders bevorzugten Ausführungsform werden neben den Dialkoholen mit 4 bis 12 Kohlenstoffatomen Alkohole mit einer Funktionalität von 3 oder mehr, beispielsweise Trialkohole, wie Gylcerin oder Trimethylolpropan, oder Quatrole, wie Pentaerythritol, eingesetzt, um eine Funktionalität des Polyethers (b1) von größer 2 einzustellen.

Der Polyesteralkohol (b1) weist vorzugsweise eine Hydroxylzahl von 10 bis 300, besonders bevorzugt 15 bis 250, mehr bevorzugt 20 bis 200, noch mehr bevorzugt 30 bis 150, noch mehr bevorzugt 40 bis 100 und insbesondere 50 bis 80 auf. Das zahlenmittlere Molekulargewicht des Polyesteralkohols (b1) ist vorzugsweise größer als 750 g/mol und beträgt mehr bevorzugt 850 bis 5000 g/mol, besonders bevorzugt 1000 bis 3000 g/mol und insbesondere 1000 bis 2500 g/mol.

Die gemittelte Funktionalität des Polyesterols (b1) beträgt vorzugsweise 1 bis 8, mehr bevorzugt 2 bis 6, besonders bevorzugt 2 bis 4, weiter bevorzugt 2 bis 3, noch weiter bevorzugt 2,1 bis 2,8 und insbesondere 2,3 bis 2,7. Die Einstellung der Funktionalität ist bekannt. So kann die Funktionalität eingestellt werden durch den Anteil an Säure mit einer Funktionalität größer als 2 in der Säurekomponente und den Anteil an Alkohol mit einer Funktionalität größer 2 in der Alkoholkomponente.

Der Gewichtsanteil des Polyesterols (b1), bezogen auf das Gesamtgewicht der polymeren Verbindungen mit gegenüber Isocyanaten reaktiven Gruppen (b) beträgt 0,1 bis 50 Gew.-%, besonders bevorzugt 1 bis 30 Gew.-%, mehr bevorzugt 2 bis 25 Gew.-%, noch mehr bevorzugt 3 bis 20 Gew.-%, noch weiter bevorzugt 4 bis 15 Gew.-% und insbesondere 5 bis 10 Gew.-%. In einer besonders bevorzugten Ausführungsform der vorliegenden Erfindung enthält die Komponente (b) neben den Polyesterolen (b1) Polyetherole und in einer weiter bevorzugten Ausführungsform keine weiteren Polyesterole.

In einer besonders bevorzugten Ausführungsform beträgt der Gehalt an Malonsäurerest der Formel -O-C(O)-CH₂-C(O)-O-, bezogen auf das Gesamtgewicht der polymeren Verbindungen mit gegenüber Isocyanaten reaktiven Gruppen (b) 0,01 bis 30, mehr bevorzugt 0,1 bis 20, besonders bevorzugt 0,5 bis 15 und insbesondere 1 bis 10 Gew.-%.

Katalysatoren c) beschleunigen die Reaktion der Polyole (b) und gegebenenfalls Kettenverlängerungs- und Vernetzungsmittel (e) sowie chemischem Treibmittel (d) mit den organischen, gegebenenfalls modifizierten Polyisocyanaten (a) stark. Dabei enthalten die Katalysatoren (c) vorzugsweise einbaubare Aminkatalysatoren.

Als übliche Katalysatoren, die zur Herstellung der Polyurethanschaumstoffe eingesetzt werden können, seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin, genannt. Ebenso kommen organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismutoctanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Einbaubare Aminkatalysatoren weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol), (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethylether), 1,4-Diazabicyclo[2.2.2]octane-2-methanol und 3-Dimethylaminoisopropyl-diisopropanolamin oder Mischungen davon.

Katalysatoren (c) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b), eingesetzt werden. In einer besonders bevorzugten Ausführungsform werden als Katalysatoren (c) ausschließlich einbaubare Katalysatoren eingesetzt.

Weiter enthalten erfindungsgemäße Reaktionsmischungen noch Treibmittel (d). Dabei können alle zur Herstellung von Polyurethanschaumstoffen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt.

Als Kettenverlängerer und Vernetzungsmittel (e) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Wenn Kettenverlängerer und/oder Vernetzungsmittel eingesetzt werden sollen, werden diese üblicherweise in Mengen von 0,5 bis 60 Gew.-%, vorzugsweise 1 bis 40 Gew.-% und besonders bevorzugt 1,5 bis 20 Gew.-%, jeweils bezogen auf das Gesamtgewicht der Komponenten (b) bis (e), eingesetzt.

Werden Kettenverlängerungsmittel und/oder Vernetzungsmittel (e) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (f) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen sowie Antioxidantien. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Insbesondere die Kombination aus Polyesterol (b1) und Antioxidantien führt zu einer weiter verringerten Emission organischer Substanzen, wie Aldehyden. Beispiele für Antioxidantien sind phenolische Substanzen, wie 2,6-Ditert-butyl-4-methylphenol, Benzenepropanolsäure, 3,5-Bis (1, 1-dimethylethyl)-4-hydroxy-C7-C9 verzweigte Alkylester, aminischer Antioxidantien, wie N,N'-Di-isopropyl-p-phenylenediamin, Thiosynergisten, wie Dilauryl-5-thiodipropionat, Phosphite und Phosphonite, wie Triphenylphosphite, Diphenylalkylphosphite, Benzofuranone und Indolinone, andere Antioxidantien, wie 0-, N- und S-Benzylverbindungen, Triazinverbindungen, Amide von *β* -(3,5-Di-tert-butyl-4-hydroxyphenyl)propionsäure, Esters von substituierten und unsubstituierten Benzoesäuren, Nickelverbindungen und Esters von *β* - 10 Thiodipropionisäure oder eine Mischung aus zwei oder mehreren dieser Antioxidantien. Solche Antioxidantien beispielsweise beschrieben in WO2017125291 und sind kommerziell erhältlich beispielsweise unter den Handelsnahmen Irganox 1076, Irganox 245, Irganox 2000, Irganox E201 (Vitamin E), Irganox 5057 oder Irgafos 38.

Im Allgemeinen werden bei der Herstellung des erfindungsgemäßen Polyurethanschaumstoffs (a) Polyisocyanat, (b) polymeren Verbindungen mit gegenüber Isocyanaten reaktiven Gruppen, (c) Katalysatoren und gegebenenfalls (d) Treibmittel, (e) Kettenverlängerungsund oder Vernetzungsmittel und (f) Hilfsmittel und/oder Zusatzstoffe zu einer Reaktionsmischung vermischt und die Reaktionsmischung wird zum Polyurethanschaumstoff ausreagiert. Dabei werden die Komponenten (a) bis (c) und gegebenenfalls (d) bis (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gegebenenfalls (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Dabei wird häufig im Zweikomponentenverfahren gearbeitet, wobei eine Polyolkomponente (A) und eine Isocyanatkomponente (B) vermischt und zur Reaktion gebracht werden. Dabei werden jeweils die Isocyanatkomponente (B) und die Polyolkomponente (A) vorgemischt. Die Isocyanatkomponente (B) enthält die Polyisocyanat (a) und die Polyolkomponente (A) üblicherweise die polymeren Verbindungen mit gegenüber Isocyanaten reaktiven Gruppen (b), die Katalysatoren (c) und gegebenenfalls Treibmittel (d), Kettenverlängerungs- und oder Vernetzungsmittel (e) und Hilfsmittel und/oder Zusatzstoffe (f). Sofern als Isocyanatkomponente (B) ein Prepolymer eingesetzt wird, können auch Teile der gegenüber Isocyanat reaktiven Komponenten, beispielsweise aus den polymeren Verbindungen mit gegenüber Isocyanaten reaktiven Gruppen (b) und/oder Kettenverlängerungs- und oder Vernetzungsmittel (e) mit den Verbindungen (a-1) zum Polyisocyanatpolymer vermischt werden. Solche Polyisocyanatprepolymere sind unter den Polyisocyanaten (a) beschrieben. In einer Ausführungsform der Erfindung werden die Polyesterole (b1) zur Herstellung der Isocyanatkomponente (B) eingesetzt, so dass die Polyolkomponente (A) keine Polyesterole (b1) enthält. In einer weiteren Ausführungsform der vorliegenden Erfindung sind die Polyesteralkohole (b1) teilweise oder bevorzugt ganz in der Polyolkomponente (A) enthalten.

Die speziellen Ausgangssubstanzen (a) bis (f) für die Herstellung von erfindungsgemäßen Polyurethanschaumstoffen unterscheiden sich jeweils quantitativ und qualitativ nur geringfügig wenn als erfindungsgemäßer Polyurethanschaumstoff ein Weichschaumstoff, ein Halbhartschaumstoff, ein Hartschaumstoff oder ein Integralschaumstoff hergestellt werden soll. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethanschaumstoffs variieren. Solche Modifikationen sind dem Fachmann bekannt.

Die Edukte für die Herstellung eines eines Weichschaums werden beispielsweise in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die eines thermoplastisch verformbaren Hartschaumstoffs beispielsweise in EP 2247636 und die Edukte für Herstellung eines Integralschaumstoffs in EP 364854, US 5506275 oder EP 897402 beschrieben. Dabei wird ein Teil der in diesen Dokumenten beschriebenen Polyole durch das Polyesterol (b1) ersetzt.

Neben dem erfindungsgemäßen Verfahren ist auch ein Polyurethanschaumstoff, erhältlich nach einem erfindungsgemäßen Verfahren Gegenstand der Erfindung.

Weiter kann die Emission von organischen Stoffen aus Polyurethanschaumstoffen auch durch in Kontakt bringen eines ausreagierten oder ausreagierenden Polyurethanschaumstoffs mit einem Polyesterol (b1) erfolgen. Dabei kann der Polyurethanschaumstoff auf beliebige Weise hergestellt werden und die Herstellung muss nicht unter Verwendung des Polyesterols (b1) erfolgen. Diese Herstellung ist dem Fachmann bekannt und in den angeführten Literaturstellen beschrieben. Die so hergestellten Polyurethanschaumstoffe werden dann mit dem Polyesterol (b1) benetzt, beispielsweise durch Aufsprühen des Polyesterols selbst oder einer Lösung, enthaltend das Polyesterol (b1), beispielsweise einer wässrigen Lösung. Ebenfalls kann das Polyesterol (b1) auch als Teil eines Formtrennmittels eingesetzt werden und nach Bestreichen der Form direkt auf den entstehenden Polyurethanschaumstoff aufgebracht werden. Die aufzubringende Menge an Polyesterol (b1) beträgt üblicherweise 0,1 bis 20 Gew.-%, besonders bevorzugt 1 bis 15 Gew.-%, mehr bevorzugt 1,5 bis 10 Gew.-%, noch mehr bevorzugt 2 bis 6 Gew.-%, jeweils bezogen auf das Gesamtgewicht des Polyurethanschaumstoffs ohne Polyesterol (b1). Weiter Gegenstand der vorliegenden Erfindung ist ein solcher Polyurethanschaumstoff.

Die erfindungsgemäßen Polyurethanschaumstoffe werden vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Dekorelemente oder als Sitzpolster, als Matratzen sowie im Innenraum von Fahrzeugen, beispielsweise im Automobilinnenraum, beispielsweise als Lenkräder, Armaturenbretter, Türverkleidungen, Teppichhinterschäumungen, akustische Schaumstoffe, wie Dachhimmel, sowie Kopfstützen oder Schaltknäufe. Dabei sind für erfindungsgemäße Polyurethanschaumstoffe sowohl die Formaldehyd- als auch Acetaldehydemissionen deutlich gegenüber einem Referenzprodukt ohne Additiv aber auch gegenüber Additiven zur Aldehydreduktion aus dem Stand der Technik reduziert. Weiter emittieren erfindungsgemäße Polyurethanschaumstoffe nur sehr geringe Mengen an flüchtigen, organischen Verbindungen (VOC) gemäß VDA 278 und TVOC gemäß VDA 277. Dabei sind Verbindungen (b1) temperaturstabil. Dadurch verliert diese Verbindung auch bei Reaktionstemperaturen von bis zu 200 ° C, die bei der Herstellung bestimmter Polyurethanschaumstoffe auftreten können, nicht an Aktivität. Weiter sind die Polyesteralkohole (b1) auch lagerstabil, insbesondere in üblichen Polyolkomponenten, die neben den polymeren Verbindungen mit gegenüber Isocyanat reaktiven Gruppen (b) üblicherweise Katalysatoren (c) und, falls vorhanden, Treibmittel, insbesondere Treibmittel enthaltend Wasser, (d), Kettenverlängerungs- und oder Vernetzungsmittel (e) und Hilfsmittel und/oder Zusatzstoffe (f) enthalten können. Von Lagerstabilität wird dabei im Rahmen der vorliegenden Erfindung ausgegangen, wenn sich nach der Lagerung in verschlossenem Behälter bei Raumtemperatur sich im Bechertest die Start- und Steigzeiten bei Raumtemperatur nicht um mehr als 50 %, bevorzugt 30% und insbesondere 20% gegenüber dem Zeitpunkt des Vermischens zur Polyolkomponente ändern. Vorzugsweise beträgt die Lagerstabilität mehr als eine Woche, besonders bevorzugt mehr als 4 Wochen und insbesondere mehr als 3 Monate.

Weiter kann das Polyesterol (b1) als Haftvermittler zur Verbesserung der Haftung eines erfindungsgemäßen Polyurethanschaumstoffs an einem Kunststoff eingesetzt werden. Gegenstand der vorliegenden Erfindung ist damit auch ein Verbundelement, enthaltend einen Kunststoff, an den sich haftend der erfindungsgemäße Polyurethanschaumstoff anschließt, wobei das Verbundelement erhältlich ist, in dem man die erfindungsgemäße Polyurethanreaktionsmischung auf einen Kunststoff aufbringt und auf dem Kunststoff zum Polyurethanschaumstoff ausreagiert.

Die erfindungsgemäßen Verbundelemente aus erfindungsgemäßem Polyurethanschaumstoff und Kunststoff können als Kunststoff beispielsweise Duromeren oder thermoplastischen Kunststoff enthalten. Vorzugsweise wird thermoplastischer Kunststoff eingesetzt. Übliche thermoplastische Kunststoffe enthalten, beispielsweise Polyphenylenoxid (PPO), Polyvinylchlorid (PVC), Acrylnitril-Butadien-Styrol (ABS), Polymethylmethacrylat (PMMA), Acrylnitril-Styrol-Acrylester (ASA), Polycarbonat (PC), thermoplastisches Polyurethan (TPU), Polyethylen (PE), Polypropylen (PP). Bevorzugt enthalten die Verbundelemente als Kunststoff (i) thermoplastische Polyolefine (TPO) wie Polyethylen und/oder Polypropylen, Polyvinylchlorid (PVC), Styrolmaleinsäureanhydrid (SMA) und/oder ein Polycarbonat/Styrol-Acrylnitril/Acrylnitril- Butadien-Blend (PC/ABS), vorzugsweise in Form von Folien, Platten oder als Litzenmaterial.

Die Kunststoffe (i) können in Form üblicher Materialien zur Herstellung der Verbundelemente eingesetzt werden, beispielsweise als Platten oder Folien, im Allgemeinen mit einer Dicke von 0,2 bis 2 mm.

Derartige Folien sind kommerziell erhältlich und ihre Herstellung ist allgemein bekannt. Die Folien weisen bevorzugt eine Dicke von 0,2 bis 2 mm auf. Als (i) können auch mindestens zwei Schichten enthaltene Folien eingesetzt werden, wobei beispielsweise die eine Schicht einen ASA und/oder Polycarbonat-Werkstoff enthält.

Weiter umfassen Kunststoffe alle üblichen Materialien auf Kunststoffbasis, die zur Isolation von elektrischen Leitern üblicherweise eingesetzt werden. Diese umfassen Polyvinylchloride (PVC), thermoplastisches Polyurethan (TPU), Polypropylen (PP) und Ethylentetrafluorethylen (ETFE).

Die Kunststoffe aus Styrolmaleinsäureanhydrid (SMA) und/oder ein Polycarbonat/Styrol-Acrylnitril/Acrylnitril-Butadien Blend (PC/ABS) können in Form üblicher Materialien zur Herstellung der Verbundelemente eingesetzt werden, beispielsweise als Versteifungsteil für Instrumententafeln oder Türseitenteile. Hautmaterialien für selbige Anwendung bestehen häufig aus thermpolastischen Polyolefinen (TPO) und Polyvinylchlorid (PVC).

Bei Einsatz als Haftvermittler weist der Polyester (b1) vorzugsweise eine Hydroxylzahl von 30 bis 100, vorzugsweise 40 bis 90 und besonders bevorzugt 50 bis 75 mg KOH / g auf. Der Anteil des Haftvermittlers beträgt vorzugsweise 0,1 bis 15 Gew.-%, besonders bevorzugt 0,5 bis 10 Gew.-% und insbesondere 1 bis 5 Gew.-%, bezogen auf das Gesamtgewicht der Verbindung mit gegenüber Isocyanat reaktiven Gruppen (b).

Die Herstellung der erfindungsgemäßen Verbundelemente erfolgt durch in Kontakt bringen der Reaktionsmischung zur Herstellung des erfindungsgemäßen Polyurethanschaumstoffs mit dem Kunststoff erfolgt üblicherweise ohne die Verwendung weiterer Haftung generierender Materialien, wie Klebstoffe. Vorzugsweise werden Kunststoff und Reaktionsmischung zur Herstellung des erfindungsgemäßen Polyurethanschaumstoffs miteinander in Kontakt gebracht, beispielsweise in einer Form. Dabei erfolgt die Herstellung des Polyurethanschaumstoffs, beispielsweise der Weichschaumstoffe, Halbhartschaumstoffe oder Integralschaumstoffe, besonders bevorzugt der Halbhartschaumstoffe und Integralschaumstoffe ansonsten nach allgemein bekannten Verfahren, beispielsweise dem one-shot-Verfahren, mit allgemeinen bekannten Werkzeugen, Formen, Mischvorrichtungen und Dosiereinrichtungen.

Die erfindungsgemäßen Verbundelemente weisen durch die Verwendung des Polyesterpolyols (b1) insbesondere eine deutlich verbesserte Haftung zwischen Kunststoff und Polyurethanschaumstoff auf. Diese Haftung kann auf unterschiedliche Weise bestimmt werden, beispielsweise durch Messen der Kraft, die zum Ablösen des Kunststoffs benötigt wird. Bei flächigen Haftverbunden wird vorzugsweise eine Abschälkraft zwischen Kunststoff und Polyurethanschaumstoff bei Messung gemäß DIN 53289 oder 53530 im Neuzustand sowie nach Wärme- und Feuchtwärmelagerung von 2,5 N/cm oder mehr erreicht. Ferner kann die Haftung nach subjektiven Beurteilungskriterien bestimmt werden. Beim Kabelumguß und bei Tüllen ist die Längswasserdichtigkeit nur gegeben, wenn Haftung zwischen Kunststoff und Polyurethanschaumstoff besteht. Diese wird z.B. nach interner Spezifikation von DEL-PHI (REI-WDP 1), interner Spezifikation von Ford (WSS-M15P45-A: FLTM-BI 104-01) oder nach Norm von PSA-Peugeot-Citroen (B21 7050) geprüft. Dabei wird eine Wassersäule auf eine Seite der Tülle gestellt; sollte Feuchtigkeit auf der anderen Seite der Tülle messbar sein, ist die Probe nicht in Ordnung (n.i.O.). Des Weiteren werden für die Dichtigkeit von Kabelummantelungen teilweise Tests mit erhöhtem Luftdruck durchgeführt und der Druckabfall gemessen.

Die erfindungsgemäßen Verbundelemente werden bevorzugt als Bauteile im Fahrzeug-, Flugzeug- oder Immobilienbau eingesetzt, beispielsweise als Armaturenbretter, Türverkleidungen, Hutablagen, Konsolen, Armauflagen oder Türspiegel. Weiter werden die erfindungsgemäßen Verbundelemente bei der Ummantelung elektrischer Leiter eingesetzt. Hier ist neben der Herstellung formstabiler umschäumter Kabelsätze auch die Herstellung von Tüllen, der Stecker- sowie der Relaisverguss zu nennen. Dabei liegt das Polyurethan bei Produkten im Fahrzeug-, Flugzeug- oder Immobilienbau sowie bei der Isolierung elektrischer Leiter geschäumt vor.

Im Folgenden soll die Erfindung anhand von Beispielen verdeutlicht werden.

Ausgangsmaterialien:

| | | |
|---|---|---|
| Polyol A: | Glycerin gestartetes Polyetherpolyol auf Basis von Ethylenoxid und Propylenoxid mit einer mittleren OH-Zahl von 28 mg KOH/g, einer Funktionalität von 2,7 und einem Propylenoxidgehalt, bezogen auf das Gesamtgewicht des Polyethers, von 84 Gew.-%. | |
| Polyol B: | Polyetherpolyol mit einer OH-Zahl 250 mg KOH/g und einer Funktionalität von 2,0 auf Basis von Polyol A (35 Gew.-%), Propylenoxid (45 Gew.-%) und Dimethylaminopropylamin (20 Gew.-%). | |
| Polyol C: | Polyetherol mit einer OH-Zahl 490 mg KOH/g und einer Funktionalität von 4.3 auf Basis von Saccharose, Glycerin und Propylenoxid, einem Sacharosegehalt von 20 Gew.-%, einem Glyceringehalt von 13% und einem Propylenoxidgehalt von 67 Gew.-%. | |
| Isocyanat A: | Mischung von 85 Gew.-% Carbodiimid-modifiziertes 4,4'-MDI und 15 Gew.-% polymeres Diphenylmethandiisocyanat (PMDI) mit einem NCO-gehalt von 29,8 Gew.-%. | |
| TEOA: | | Triethanolamin |
| Isopur SU-12021: | | Schwarzpaste der Firma ISL-Chemie |
| Jeffcat DPA: | | Katalysator der Firma Huntsman |
| Jeffcat ZF10: | | Katalysator der Firma Huntsman |

### Additive

| | |
|---|---|
| V1: | Trimethylol propan-triacetoacetat |
| V2: | Reaktionsprodukt von Malonsäure und Diethyleneglykol (2:3, Mw 458 g/mol) |
| V3: | Veresterungsprodukt von 1 mol Polyol C mit 4 mol Methylacetoacetat |
| V4: | Polyesterpolyol aus Adipinsäure, 1,4-Butandiol, Isopththalsäure, Monoethylenglykol mit einer mittleren OH-Zahl von 55 mg KOH/g. |
| A1: | Polyesterpolyol aus Malonsäurediethylester, Adipinsäure (Molverhältnis 4 : 1), 1,6-Hexandiol und Glycerin, mit einer mittleren OH-Zahl von 70 mg KOH/g. |
| A2: | Polyesterpolyol aus Malonsäurediethylester, 1,6-Hexandiol und Glycerin, mit einer mittleren OH-Zahl von 71 mg KOH/g. |
| A3: | Polyesterpolyol aus Malonsäurediethylester, Adipinsäure (Molverhältnis 4 : 1) und 1,6 Hexandiol, mit einer mittleren OH-Zahl von 58 mg KOH/g. |
| A4: | Polyesterpolyol aus Malonsäurediethylester und 1,6-Hexandiol mit einer mittleren OH-Zahl von 56 mg KOH/g. |

### Synthese der Additive A1 bis A4

### Synthese von A1:

In einen 4l Rundhalskolben versehen mit Thermometer, Stickstoffeinleitung, Heizpilz, Destillationskolonne und Rührer werden 142,29 g Adipinsäure, 0,01 g TTB (Titanium(IV)butoxid CAS: 5593-70-4), 23,02 g Glycerin und 604,87 g 1,6-Hexandiol vorgelegt und auf 120 ° C erwärmt. Nachdem die Säure vollständig aufgeschmolzen ist, wird die Temperatur schrittweise auf 240° C erhöht und mehrere Stunden bei 240° C das Wasser abdestilliert. Nach 4 h beträgt die Säurezahl 0,1 mg KOH/g und die Reaktionsmischung wird auf 150° C abgekühlt. 623,79 g Malonsäurediethylester werden zugegeben und die Reaktionstemperatur wird schrittweise auf 180° C erhöht. Nach 8 Stunden werden weiter 19 g Malonsäurediethylester zugegeben und der Ansatz wird für weiter 6 h bei 180° C gerührt. Es werden nochmals 6,9 g Malonsäurediethylester zugegeben und es wird 2 weitere Stunden bei 180° C Ethanol abdestilliert. Der Ansatz wird abgekühlt und mit 1,5 g Irganox 1076 stabilisiert. Es wird ein farbloses Polyester Polyol erhalten mit einer Hydroxylzahl von 70,3 mg KOH/g, einer Säurezahl < 0,1 mg KOH/g und einer Viskosität von 5118 mPas bei 25 ° C erhalten.

### Synthese von A2:

In einen 4l Rundhalskolben versehen mit Thermometer, Stickstoffeinleitung, Heizpilz, Destillationskolonne und Rührer werden 855,74 g Malonsäurediethylester, 630,87 g 1,6-Hexandiol, 23,02 g Glycerin und 0,01 g TTB (Titanium(IV)butoxide CAS: 5593-70-4) gegeben. Die Temperatur wird schrittweise auf 160° C erhöht. Es wird für 7 Stunden bei 160° C Ethanol abdestilliert. Anschließend werden weitere 50 g Malonsäurediethylester zugegeben und die Reaktionsmischung wird für 7 h bei 160° C gekocht. Das Produkt wird mit 1,5 g Irganox 1076 stabilisiert. Es wird ein farbloses Polyester Polyol erhalten mit einer Hydroxylzahl von 71 mg KOH/g, einer Säurezahl < 0,1 mg KOH/g und einer Viskosität von 3114 mPas bei 25 ° C erhalten.

### Synthese von A3:

In einen 4l Rundhalskolben versehen mit Thermometer, Stickstoffeinleitung, Heizpilz, Destillationskolonne und Rührer werden 141,31 Adipinsäure, 0,01 g TTB (Titanium(IV)butoxide CAS: 5593-70-4) und 630,45 g 1,6-Hexandiol vorgelegt und auf 120 ° C erwärmt. Nachdem die Säure vollständig aufgeschmolzen ist wird die Temperatur schrittweise auf 240° C erhöht und mehrere Stunden bei 240° C das Wasser abdestilliert. Nach 5 h beträgt die Säurezahl 0,1 mg KOH/g und die Reaktionsmischung wird auf 150° C abgekühlt. 619,50 g Malonsäurediethylester werden zugegeben und die Reaktionstemperatur wird schrittweise auf 180° C erhöht. Nach 11 Stunden werden weiter 16,5 g Malonsäurediethylester zugegeben und der Ansatz wird für weiter 3 h bei 180° C gerührt. Der Ansatz wird abgekühlt und mit 1,50 g Irganox 1076 stabilisiert. Es wird ein farbloses Polyester Polyol erhalten mit einer Hydroxylzahl von 57,7 mg KOH/g, einer Säurezahl < 0,1 mg KOH/g und einer Viskosität von 4698 mPas bei 25 ° C erhalten.

### Synthese von A4:

In einen 4l Rundhalskolben versehen mit Thermometer, Stickstoffeinleitung, Heizpilz, Destillationskolonne und Rührer werden 809,37 g Malonsäurediethylester, 656,28 g 1,6-Hexandiol und 0,01 g TTB (Titanium(IV)butoxide CAS: 5593-70-4) gegeben. Die Temperatur wird schrittweise auf 160° C erhöht. Es wird für 4 Stunden bei 160° C Ethanol abdestilliert. Anschließend werden weitere 50 g Malonsäurediethylester zugegeben und die Reaktionsmischung wird für 5 h bei 160° C gekocht. Das Produkt wird mit 1,5 g Irganox 1076 stabilisiert. Es wird ein farbloses Polyester Polyol erhalten mit einer Hydroxylzahl von 56,1 mg KOH/g, einer Säurezahl < 0,1 mg KOH/g und einer Viskosität von 3338 mPas bei 25 ° C erhalten.

### Methoden:

Viskositätsbestimmung: Die Viskosität der Polyole wurde, wenn nicht anders angegeben, bei 25 ° C gemäß DIN EN ISO 3219 (1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt.

Messung der Hydroxylzahl: Die Hydroxylzahlen wurden nach der Phthalsäureanhydrid-Methode DIN 53240 (1971-12) bestimmt und in mg KOH/g angegeben.

Messung der Säurezahl: Die Säurezahl wurde nach DIN EN 1241 (1998-05) bestimmt und ist in mg KOH/g angegeben.

Zur Bestimmung von Formaldehyd wurde analog ASTM D-5116-06 vorgegangen. Die Kammergröße betrug 4,7 Litern. Als Polyurethanproben wurden Stücke mit einer Größe von 110 mm × 100 mm × 25 mm aus dem Innern des Schaumstoffs eingesetzt. Die Temperatur in der Meßkammer betrug während der Messung 65 ° C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd im Eluat wurde mittels HPLC bestimmt. Nach diesem Aufbau liegt die Nachweisgrenze für Formaldehydemissionen bei ≤ 11 µg/m³.

Zur Bestimmung der TVOC Werte wurde gemäß der VDA 277 vorgegangen.

Zur Untersuchung der Haftung wurden Probekörper wie oben beschrieben hergestellt, wobei eine PVC Folie (Testfolie, 0.42 mm, von Benecke-Kaliko, Deutschland) in die Form eingelegt wurde. Die Haftung wird dabei nach einer Stunde nach der Herstellung anhand einer subjektiven Testmethode beurteilt. Dazu wurde die PVC Folie von der Polyurethan-Platte abgezogen und die Haftung anhand einer Bewertungsskala von 1 bis 5 bewertet. Dabei bedeutet:
5 Adhesiver Bruch, keine Haftung
4 Kohesiver Bruch, PVC Folie kann von der Polyurethane Platte leicht entfernt werden
3 Kohesiver Bruch, PVC Folie kann von der Polyurethane Platte entfernt werden
2 Kohesiver Bruch, PVC Folie kann von der Polyurethane Platte schwer entfernt werden
1 Kohesiver Bruch, PVC Folie kann von der Polyurethane Platte sehr schwer entfernt werden

Für eine Bewertung von 1-2 ist die Haftkraft in der Regel z. B. für Automobilanwendungen ausreichend.

### Allgemeines Herstellbeispiel

Die Mischung A wurde durch Vermischen von folgenden Komponenten hergestellt:

| | |
|---|---|
| 87,1 | Gew.-Teile Polyol A |
| 3,0 | Gew.-Teile Polyol B |
| 1,5 | Gew.-Teile TEOA |
| 0,5 | Gew.-Teile Isopur SU-12021 |
| 2,3 | Gew.-Teile Wasser |
| 0,4 | Gew.-Teile Jeffcat DPA |
| 0,2 | Gew.-Teile Jeffcat ZF10 |
| 0,5 oder 5 | Gew.-Teile Verbindungen V1-V4und A1-A4 gemäß Tabelle 1. |

Die Mischung A und die Isocyanat A sowie die Additive gemäß Tabelle 1 wurden bei einem Isocyanatindex von 100 miteinander vermischt und in eine geschlossene Form gegeben, so dass Formteile mit einer mittleren Dichte von 160 g/L erhalten wurden.

### Eigenschaften

Tabelle 1 zeigt die Werte für TVOC nach VDA 277, für Formaldehydemissionen sowie den Einfluss des Polyesterols (b1) auf die Reaktionszeiten nach Lagerung und der Haftung:

**Tabelle 1**

| | Gew.-Teile in A | VDA 277 TVOC (ppm) | Formaldehyd (*µ* g/m³) | Startzeit / Steigzeit nach eine Woche Lagerung bei 50° C | | Haftung |
|---|---|---|---|---|---|---|
| Referenz | - | 10 | 676 | 11 | 60 | 5 |
| V1 | 0.5 | 123 | 64 | 11 | 60 | 5 |
| V1 | 5 | 1754 | n.m. | 12 | 64 | 4 |
| V2 | 0.5 | 15 | 198 | 13 | 70 | 5 |
| V2 | 5 | 83 | 14 | 32 | 150 | 5 |
| V3 | 0.5 | 104 | 105 | 12 | 60 | 4 |
| V3 | 5 | 1603 | n.m. | 12 | 60 | 4 |
| V4 | 5 | 8 | 660 | 10 | 60 | 1 |
| A1 | 5 | 10 | 58 | 10 | 62 | 1 |
| A2 | 5 | n.m. | 36 | 11 | 62 | 1 |
| A3 | 5 | 9 | 62 | 11 | 60 | 1 |
| A4 | 5 | 8 | 43 | 11 | 61 | 2 |

Tabelle 1 zeigt, dass die Additive V1 bis V3 der Vergleichsversuche die Formaldehydemissionen stark reduzieren, dass im Gegenzug die TVOC-Emissionen gemäß VDA 277 gegenüber der Referenz aber stark erhöht sind (n.m. steht für "not measured"). Verbindung V4 führt zu guter Haftung und zeigt geringe Emissionen gemäß VDA 277, die Formaldehydemissionen liegen aber im Bereich der Referenz. Dagegen zeigen die erfindungsgemäßen Verbindungen A1 bis A4 sowohl eine deutliche Reduktion der Formaldehydemissionen als auch der Emissionen gemäß VDA 277. Diese liegen mit Werten von kleiner als 20 ppm unter den Maximalwerten, die im Bereich Automobilbau gefordert werden. Ebenfalls zeigen die Verbindungen A1 bis A4 im Wesentlichen keinen Einfluss auf die Start- und Steigzeiten nach einer Woche Lagerung der Mischung A bei 50 ° C, während insbesondere die Vergleichsverbindung V2 zu deutlich erhöhten Werten führt. Weiter zeigen die Beispiele unter Einsatz der erfindungsgemäßen Polyesterole (b1) eine sehr gute Haftung auf einer PVC-Folie.

## Patentansprüche

1. Verfahren zur Herstellung von Polyurethanschaumstoffen bei dem man
(a) Polyisocyanat,
(b) polymeren Verbindungen mit gegenüber Isocyanaten reaktiven Gruppen,
(c) Katalysatoren,
(d) Treibmittel und gegebenenfalls
(e) Kettenverlängerungs- und oder Vernetzungsmittel und
(f) Hilfsmittel und/oder Zusatzstoffe
zu einer Reaktionsmischung vermischt und die Reaktionsmischung zum Polyurethan ausreagieren lässt,
wobei die polymeren Verbindungen (b) ein Polyesterol (b1), erhältlich durch Polykondensation einer Säurekomponente mit einer Alkoholkomponente, enthält, wobei die Säurekomponente Malonsäure und/oder deren Derivate und die Alkoholkomponente einen aliphatischen Dialkohol mit 4 bis 12 Kohlenstoffatomen enthält und der Gewichtsanteil des Polyesterols (b1), bezogen auf das Gesamtgewicht der polymeren Verbindungen mit gegenüber Isocyanaten reaktiven Gruppen (b) 0,1 bis 50 Gew.-% beträgt.

2. Verfahren nach Anspruch 1, **dadurch gekennzeichnet, dass** die Säurekomponente neben Malonsäure und /oder deren Derivate eine oder mehrere weitere Dicarbonsäuren mit 6 bis 12 Kohlenstoffatomen oder deren Derivate enthält.

3. Verfahren nach Anspruch 1 oder 2, **dadurch gekennzeichnet, dass** der Gehalt an Malonsäure und/oder Malonsäurederivat, bezogen auf den Gesamtgehalt an Säurekomponente, 20 bis 100 Mol-% beträgt.

4. Verfahren nach einem der Ansprüche 1 bis 3, **dadurch gekennzeichnet, dass** das zahlenmittlere Molekulargewicht des Polyesterols (b1) größer ist als 750 g/mol.

5. Verfahren nach einem der Ansprüche 1 bis 4, **dadurch gekennzeichnet, dass** die mittlere Funktionalität des Polyesterols (b1) 1 bis 8 beträgt.

6. Verfahren nach einem der Ansprüche 1 bis 5, **dadurch gekennzeichnet, dass** die Hydroxylzahl des Polyesterols (b1) 10 bis 300 beträgt.

7. Verfahren nach einem der Ansprüche 1 bis 6, **dadurch gekennzeichnet, dass** die polymeren Verbindungen mit gegenüber Isocyanaten reaktiven Gruppen (b) Polyetherole enthalten.

8. Verfahren nach einem der Ansprüche 1 bis 7, **dadurch gekennzeichnet, dass** die Katalysatoren (c) einbaubare Aminkatalysatoren enthalten, die neben der bzw. den gegenüber Isocyanaten reaktiven Gruppen eine oder mehrere tertiäre, aliphatische Aminogruppen aufweisen.

9. Verfahren nach Anspruch 8, **dadurch gekennzeichnet, dass** der einbaubare Aminkatalysator ausgewählt ist aus der Gruppe bestehend aus Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol), (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethylether), 1,4-Diazabicyclo[2.2.2]octane-2-methanol und 3-Dimethylaminoisopropyl-diisopropanolamin oder Mischungen davon.

10. Verfahren nach einem der Ansprüche 1 bis 9, **dadurch gekennzeichnet, dass** das Polyurethan Teil eines Verbundelements ist, enthaltend einen Kunststoff, an den sich haftend das Polyurethan anschließt, wobei das Verbundelement erhältlich ist, in dem man die Polyurethanreaktionsmischung gemäß einem der Ansprüche 1 bis 9 auf einen Kunststoff aufbringt und auf dem Kunststoff zum Polyurethan ausreagiert.

11. Verfahren nach Anspruch 10, **dadurch gekennzeichnet, dass** der Kunststoff ein thermoplastischer Kunststoff ist.

12. Verfahren zur Herstellung von Polyurethanschaumstoffen, wobei man ein Polyurethanschaumstoff mit einem Polyesterol (b1) in Kontakt bringt.

13. Polyurethanschaumstoff, erhältlich nach einem der Ansprüche 1 bis 12.

14. Polyurethanschaumstoff nach Anspruch 13, **dadurch gekennzeichnet, dass** das Polyurethan ein Automobilinnenraumteil ist.

15. Verwendung eines Polyurethanschaumstoffs nach Anspruch 13 oder 14 im Innern von geschlossenen Räumen.

## Claims

1. A process for producing polyurethane foams comprising mixing
(a) polyisocyanate,
(b) polymeric compounds having isocyanate-reactive groups,
(c) catalysts,
(d) blowing agents and optionally
(e) chain-extending and/or crosslinking agents and
(f) auxiliary and/or additive substances to afford a reaction mixture and reacting the reaction mixture to afford the polyurethane,
where the polymeric compounds (b) comprise a polyesterol (b1) obtainable by polycondensation of an acid component with an alcohol component, where the acid component comprises malonic acid and/or derivatives thereof and the alcohol component comprises an aliphatic dialcohol having 4 to 12 carbon atoms and the weight fraction of the polyesterol (b1) based on the total weight of the polymeric compounds having isocyanate-reactive groups (b) is 0.1% to 50% by weight.

2. The process according to claim 1, wherein in addition to malonic acid and/or derivatives thereof the acid component comprises one or more further dicarboxylic acids having 6 to 12 carbon atoms or derivatives thereof.

3. The process according to claim 1 or 2, wherein the content of malonic acid and/or malonic acid derivative based on the total content of acid component is 20 to 100 mol%.

4. The process according to any of claims 1 to 3, wherein the number-average molecular weight of the polyesterol (b1) is greater than 750 g/mol.

5. The process according to any of claims 1 to 4, wherein the average functionality of the polyesterol (b1) is 1 to 8.

6. The process according to any of claims 1 to 5, wherein the hydroxyl number of the polyesterol (b1) is 10 to 300.

7. The process according to any of claims 1 to 6, wherein the polymeric compounds having isocyanate-reactive groups (b) comprise polyetherols.

8. The process according to any of claims 1 to 7, wherein the catalysts (c) comprise incorporable amine catalysts which, in addition to the isocyanate-reactive group(s), comprise one or more tertiary aliphatic amino groups.

9. The process according to claim 8, wherein the incorporable amine catalyst is selected from the group consisting of bisdimethylaminopropylurea, bis(N,N-dimethylaminoethoxyethyl) carbamate, dimethylaminopropylurea, N,N,N-trimethyl-N-hydroxyethylbis(aminopropyl ether), N,N,N-trimethyl-N-hydroxyethylbis(aminoethyl ether), diethylethanolamine, bis(N,N-dimethyl-3-aminopropyl)amine, dimethylaminopropylamine, 3-dimethylaminopropyl-N,N-dimethylpropane-1,3-diamine, dimethyl-2-(2-aminoethoxyethanol), (1,3-bis(dimethylamino)propan-2-ol), N,N-bis(3-dimethylaminopropyl)-N-isopropanolamine, bis(dimethylaminopropyl)-2-hydroxyethylamine, N,N,N-trimethyl-N-(3-aminopropyl)-bis(aminoethyl ether), 1,4-diazabicyclo[2.2.2]octane-2-methanol and 3-dimethylaminoisopropyl diisopropanolamine or mixtures thereof.

10. The process according to any of claims 1 to 9, wherein the polyurethane is part of a composite element comprising a plastic to which the polyurethane is adhesively bonded, where the composite element is obtainable by applying the polyurethane reaction mixture according to any of claims 1 to 9 to a plastic and reacting it to afford the polyurethane on the plastic.

11. The process according to claim 10, wherein the plastic is a thermoplastic.

12. A process for producing polyurethane foams comprising contacting a polyurethane foam with a polyesterol (b1).

13. A polyurethane foam obtainable according to any of claims 1 to 12.

14. The polyurethane foam according to claim 13, wherein the polyurethane is an automotive interior part.

15. The use of a polyurethane foam according to claim 13 or 14 in the interior of enclosed spaces.

## Revendications

1. Procédé pour la production de polyuréthanes, dans lequel on mélange
(a) un polyisocyanate,
(b) des composés polymères comportant des groupes réactifs avec les isocyanates,
(c) des catalyseurs
(d) un agent porogène et éventuellement
(e) des extendeurs de chaîne et/ou agents de réticulation et
(f) des adjuvants et/ou additifs
pour obtenir un mélange réactionnel et on fait réagir complètement le mélange pour aboutir au polyuréthane, les composés polymères (b) comprenant un polyesterol (b1) pouvant être obtenu par polycondensation d'un composant acide avec un composant alcool, le composant acide comprenant l'acide malonique et/ou ses dérivés et le composant alcool comprenant un dialcool aliphatique ayant de 4 à 12 atomes de carbone, et la proportion en poids du polyesterol (b1), par rapport au poids total des composés polymères (b) comportant des groupes réactifs avec les isocyanates valant de 0,1 à 50% en poids.

2. Procédé selon la revendication 1, **caractérisé en ce que** le composant acide comprend, outre l'acide malonique et/ou ses dérivés, un ou plusieurs autres acides dicarboxyliques ayant de 6 à 12 atomes de carbone ou dérivés de tels acides.

3. Procédé selon la revendication 1 ou 2, **caractérisé en ce que** la teneur en acide malonique et/ou dérivé d'acide malonique vaut de 20 à 100 % en moles, par rapport à la teneur totale en composant acide.

4. Procédé selon l'une quelconque des revendications 1 à 3, **caractérisé en ce que** la masse moléculaire moyenne en nombre du polyesterol (b1) est supérieure à 750 g/mole.

5. Procédé selon l'une quelconque des revendications 1 à 4, **caractérisé en ce que** la fonctionnalité moyenne du polyesterol (b1) vaut de 1 à 8.

6. Procédé selon l'une quelconque des revendications 1 à 5, **caractérisé en ce que** l'indice d'hydroxyle du polyesterol (b1) vaut de 10 à 300.

7. Procédé selon l'une quelconque des revendications 1 à 6, **caractérisé en ce que** les composés polymères (b) comportant des groupes réactifs avec les isocyanates comprennent des polyétherols.

8. Procédé selon l'une quelconque des revendications 1 à 7, **caractérisé en ce que** les catalyseurs (c) comprennent des catalyseurs de type amine incorporables qui comportent, en plus du ou des groupes réactifs avec les isocyanates, un ou plusieurs groupes amino aliphatiques tertiaires.

9. Procédé selon la revendication 8, **caractérisé en ce que** le catalyseur de type amine incorporable est choisi dans le groupe constitué par la bis-diméthylaminopropylurée, le carbamate de bis(N,N-diméthylamino-éthoxyéthyle), la diméthylaminopropylurée, le N,N,N-triméthyl-N-hydroxyéthyl-bis(aminopropyléther), le N,N,N-triméthyl-N-hydroxyéthyl-bis(aminoéthyléther), la diéthyléthanolamine, la bis(N,N-diméthyl-3-amino-propyl)amine, la diméthylaminopropylamine, la 3-diméthylaminopropyl-N,N-diméthylpropane-1,3-diamine, le diméthyl-2-(2-aminoéthoxyéthanol), le (1,3-bis(diméthylamino)-propan-2-ol), la N,N-bis-(3-diméthylaminopropyl)-N-isopropanolamine, la bis-(diméthylaminopropyl)-2-hydroxyéthylamine, le N,N,N-triméthyl-N-(3-aminopropyl)-bis(aminoéthyléther), le 1,4-diazabicyclo[2.2.2]octane-2-méthanol et la 3-diméthylamino-isopropyl-diisopropanolamine ou des mélanges de ceux-ci/celles-ci.

10. Procédé selon l'une quelconque des revendications 1 à 9, **caractérisé en ce que** la pièce polyuréthane est un élément composite comprenant une matière plastique à laquelle adhère le polyuréthane, l'élément composite pouvant être obtenu en appliquant sur une matière plastique le mélange réactionnel de polyuréthane selon l'une quelconque des revendications 1 à 9 et en le faisant réagir complètement sur la matière plastique pour aboutir au polyuréthane.

11. Procédé selon la revendication 10, **caractérisé en ce que** la matière plastique est une matière synthétique thermoplastique.

12. Procédé pour la production de mousses de polyuréthane, dans lequel on met une mousse de polyuréthane en contact avec un polyesterol (b1).

13. Mousse de polyuréthane, pouvant être obtenue selon l'une quelconque des revendications 1 à 12.

14. Mousse de polyuréthane selon la revendication 13, **caractérisée en ce que** le polyuréthane est une pièce d'habitacle d'automobile.

15. Utilisation d'une mousse de polyuréthane selon la revendication 13 ou 14 à l'intérieur d'espaces clos.
